# EUROPÄISCHE PATENTSCHRIFT

(11) **EP 2 913 735 B1**
(45) Veröffentlichungstag und Bekanntmachung des Hinweises auf die Patenterteilung: **23.10.2019**
(21) Anmeldenummer: 15154773.4
(22) Anmeldetag: 12.02.2015
(51) Int. Cl.: H05B 1/02, H05B 3/00, G05D 23/19

(54) **LEISTUNGSMODUL UND SCHNITTSTELLENMODUL FÜR HEIZUNGSSTEUERUNG**
POWER MODULE AND INTERFACE MODULE FOR HEATING CONTROL
MODULE DE PUISSANCE ET MODULE D'INTERFACE POUR RÉGLAGE DE CHAUFFAGE

(30) Priorität: 28.02.2014 DE 102014203657
(43) Veröffentlichungstag der Anmeldung: 02.09.2015
(73) Patentinhaber: Siemens Aktiengesellschaft, 80333 München (DE)
(72) Erfinder: Bach, Christine, 90431 Nürnberg (DE); Schmidt, Bernhard, 90425 Nürnberg (DE); Schneider, Reinhard, 96049 Bamberg (DE); Stoll, Jürgen, 90768 Fürth (DE)

(56) Entgegenhaltungen:
- DE-U1-202013 003 006
- US-A1- 2002 008 101

## Beschreibung

Die Erfindung betrifft ein Leistungsmodul und ein Schnittstellenmodul gemäß Patentanspruch 1 bzw. 9 sowie ein System zur Heizungssteuerung und/oder -regelung gemäß Patentanspruch 14.

Industriell gefertigte Produkte werden oft mit Hilfe von Heizungen thermisch behandelt. Schon geringe Abweichungen im Wärmeprozess können dabei zu einer enormen Beeinträchtigung der Produktqualität führen. Um die Qualität eines wärmebehandelten Produktes zu erhöhen, ist es wichtig, die benötigte Energie zeitlich und räumlich sehr präzise fokussieren zu können. Dies erfolgt mit Hilfe spezieller Heizungssteuerungen und/oder -regelungen, die eine höchst präzise Ansteuerung von Heizelementen gewährleisten. Als Heizelemente kommen dabei häufig ohmsche Verbraucher in Form von Heizstrahlern, insbesondere Infrarotstrahlern, zum Einsatz.

Beispielsweise weisen Blasformanlagen üblicherweise Heizstrahlerfelder zum Erwärmen von Preformen auf. Die Heizstrahler (Infrarotstrahler) werden von einer Heizungssteuerung und/oder -regelung über ein in die Spannungsversorgung geschaltetes Schaltelement elektrisch versorgt, hinsichtlich ihrer Leistungsabgabe gesteuert/geregelt und überwacht.

Die Heizungssteuerung und/oder -regelung empfängt hierzu häufig über einen Feldbus von einer übergeordneten Steuerung und/oder Regelung, z.B. einer speicherprogrammierbaren Steuerung (SPS), Sollwerte für die Heizleistung der angeschlossenen Heizelemente. Die Sollwerte können beispielsweise in Form von absoluten Sollwerten, von auf eine maximale Leistung oder von auf eine Nennleistung bezogenen Sollwerten vorliegen. Die Leistung kann sich beispielsweise auf eine abzugebende Heizleistung oder eine aufzunehmende elektrische Leistung von Heizelementen beziehen. Aus diesen Sollwerten werden dann in der Heizungssteuerung und/oder -regelung mit Hilfe eines vorgegebenen Steuer- und/oder Regelungsalgorithmus Ansteuersignale für die Schaltelemente abgeleitet. Die Sollwerte können aber auch schon in Form von Pulspaketen oder Prozentwerten an Halbwellen pro Zeiteinheit (z.B. pro Sekunde) vorliegen, aus denen dann direkt Ansteuersignale für die Schaltelemente abgeleitet werden können. Über die Ansteuersignale werden dann die Schaltzustände der Schaltelemente und damit die Heizleistungen der Heizelemente gesteuert oder geregelt. Zur Vereinfachung und zur besseren Verständlichkeit werden im Folgenden alle diese Sollwerte als "Sollwerte für eine Heizleistung" bezeichnet.

Die Ansteuerung der Schaltelemente und somit die Steuerung oder Regelung des Schaltzustandes bzw. der Heizleistung kann beispielsweise mit einer Phasenanschnittsteuerung oder einer Halbwellensteuerung mit im Nulldurchgang leistungslos schaltenden Schaltelementen erfolgen. Hierbei kommen als Schaltelemente beispielsweise Halbleiterschalter (z.B. Solid-State Relay) zum Einsatz.

US 2002/0008101 A1 zeigt ein Heizungssteuerungssystem für eine Mehrzahl von untereinander verbundenen Heizelementen zur langgestreckten Anordnung auf einem Rohr. Die Heizelemente sind mittels einer sogenannten "Daisy Chain" verbindbar und jede Daisy Chain wird mittels eines Basisgeräts mit Spannung und Ansteuersignalen versorgt.

DE 20 2013 003 006 U1 zeigt ein Heizungssteuerungsgerät mit mehreren Heizelementausgängen und einem Lüfterausgang, wobei eine Stromverteilungseinrichtung eingangsseitig elektrisch mit dem Spannungsversorgungseingang und ausgangsseitig über jeweils einen Abzweig elektrisch mit den Heizelementausgängen und mit dem Lüfterausgang verbunden ist, um diese mit elektrischem Strom aus der Spannungsversorgung zu versorgen, wobei in jedem der Abzweige jeweils ein Schaltelement geschaltet ist.

Im industriellen Umfeld sind dabei zum einen Heizungssteuerungen in kompakter Bauweise mit einem Gehäuse in Schutzart IP65 bekannt, die deshalb in unmittelbarer Nähe der Heizelemente eingesetzt werden können. Das Gehäuse dieser Heizungssteuerungen weist einen Anschluss für einen offenen industriellen Feldbus wie z.B. PROFIBUS für eine Kommunikation mit einer übergeordneten Steuerung auf. Die Zahl der Leistungsausgänge für Heizelemente ist dabei jedoch beispielsweise auf unter zehn begrenzt. Eine Versorgung räumlich weit voneinander entfernter Heizelemente durch eine derartige Heizungssteuerung erfordert dann einen großen Verkabelungsaufwand. Alternativ kann für jedes der verteilten Heizelemente jeweils eine separate Heizungssteuerung vorgesehen werden, wodurch sich jedoch die Zahl der Heizungssteuerungen und Buszugänge sowie der Steueraufwand in der übergeordneten Steuerung erhöht.

Weiterhin sind im industriellen Umfeld Heizungssteuerungen bekannt, die aus einem Kommunikations- und Steuerteil und einem oder mehreren Leistungsteilen zur Ansteuerung mehrerer Heizelemente bestehen. Das Kommunikations- und Steuerteil dient zur Kommunikation mit einer übergeordneten Steuerung und zur Steuerung der Leistungsteile. Das Leistungsteil steuert je nach Vorgabe durch das Kommunikations- und Steuerteil, ggf. über gesonderte Schaltelemente, die Heizelemente. Das Kommunikations- und Steuerteil und die Leistungsteile sind dabei als jeweils separate Baugruppen ohne besondere Schutzart räumlich unmittelbar nebeneinander angeordnet bzw. sogar in einem gemeinsamen Systemrahmen ohne besondere Schutzart zusammengefasst. Diese Heizungssteuerungen können deshalb nicht in unmittelbarer Nähe der Heizelemente eingesetzt werden, sondern werden üblicherweise zentral in einem Steuer- oder Schaltschrank angeordnet, der dann über eine spezielle Schutzart verfügt. Auch hier erfordert eine Versorgung räumlich weit voneinander entfernter Heizlasten dann einen großen Verkabelungsaufwand. Alternativ kann für jede der räumlich verteilten Heizlasten jeweils eine separate Heizungssteuerung bestehend aus jeweils einem Kommunikations- und Steuerteil sowie einem oder mehreren Leistungsteilen vorgesehen werden, die dann aber wiederum in einem speziell geschützten Bereich (z.B. Steuerschrank) angeordnet werden müssen. Hierdurch erhöhen sich jedoch die Zahl der Heizungssteuerungen und Buszugänge, der Steueraufwand in der übergeordneten Steuerung, der Verdrahtungsaufwand für die Versorgung der internen Elektronik der Komponenten mit einer sicheren Kleinspannung (z.B. 24 Vdc) sowie der Aufwand für den Schutz der Heizungssteuerung beträchtlich.

Ausgehend hiervon ist es deshalb Aufgabe vorliegender Erfindung, eine Lösung anzugeben, mit der flexibel eine größere Anzahl entweder räumlich eng nebeneinander liegender als auch räumlich weit auseinander verteilter Heizelemente bei geringer Anzahl von Komponenten und mit geringem Verkabelungsaufwand gesteuert oder geregelt werden können. Außerdem soll hierbei der Steuer-/Regelungsaufwand in einer übergeordneten Steuerungs- und/oder Regelungseinrichtung klein gehalten werden.

Diese Aufgabe wird erfindungsgemäß durch ein Leistungsmodul mit den Merkmalen des Patentanspruchs 1, durch ein Schnittstellenmodul mit den Merkmalen des Patentanspruchs 9 und ein modulares Heizungssteuerungs- und/oder -regelungssystem mit zumindest einem derartigen Leistungsmodul und einem derartigen Schnittstellenmodul gemäß Patentanspruch 14 gelöst.

Ein erfindungsgemäßes Leistungsmodul weist ein Gehäuse auf mit
- einer ersten Kommunikationsschnittstelle und einer zweiten Kommunikationsschnittstelle, wobei die erste Kommunikationsschnittstelle mit einer zweiten Kommunikationsschnittstelle eines anderen Leistungsmoduls oder eines Schnittstellenmoduls und die zweite Kommunikationsschnittstelle mit einer ersten Kommunikationsschnittstelle eines anderen Leistungsmoduls verbindbar ist,
- einer ersten Spannungsversorgungsschnittstelle und einer zweiten Spannungsversorgungsschnittstelle zur Spannungsversorgung des Leistungsmoduls, wobei die erste Spannungsversorgungsschnittstelle mit einer zweiten Spannungsversorgungsschnittstelle eines anderen Leistungsmoduls oder eines Schnittstellenmoduls und die zweite Spannungsversorgungsschnittstelle mit einer ersten Spannungsversorgungsschnittstelle eines anderen Leistungsmoduls verbindbar ist,
- mehreren Leistungsausgängen, an die jeweils ein Heizelement, insbesondere jeweils ein Heizstrahler, elektrisch anschließbar ist,
- einem Leistungseingang, der elektrisch an eine Spannungsversorgung für die Heizelemente anschließbar ist,
wobei das Leistungsmodul, von dem Gehäuse umgeben, aufweist:
- eine Stromverteilungseinrichtung, die eingangsseitig elektrisch mit dem Leistungseingang und ausgangsseitig über jeweils einen Abzweig elektrisch mit den Leistungsausgängen verbunden ist, um diese mit elektrischem Strom aus der Spannungsversorgung zu versorgen,
- jeweils ein Schaltelement in jedem der Abzweige,
- eine Steuer- und/oder Regeleinheit, die derart eingerichtet ist, dass sie den Schaltzustand der Schaltelemente in Abhängigkeit von Sollwerten für eine Heizleistung der Heizelemente steuert und/oder regelt,
- eine Kommunikationseinheit, die derart eingerichtet ist, dass sie für das Leistungsmodul bestimmte Sollwerte über die erste Kommunikationsschnittstelle empfängt und an die Steuer- und/oder Regeleinheit übergibt und über die erste Kommunikationsschnittstelle empfangene und nicht für das Leistungsmodul bestimmte Sollwerte an die zweite Kommunikationsschnittstelle weiterleitet.

Das Leistungsmodul dient somit der eigentlichen Steuerung und/oder Regelung der Heizleistung der angeschlossenen Heizelemente mittels der jeweils zugeordneten Schaltelemente. Jedem räumlich in einer Anlage verstreuten Heizelement bzw. jeder räumlich verstreuten Gruppe von Heizelementen kann dann jeweils ein Leistungsmodul zugeordnet werden. Da jedes Leistungsmodul ein eigenes Gehäuse aufweist, muss es dabei nicht in einem zentralen Steuerschrank angeordnet werden, sondern kann direkt vor Ort bei einem Heizelement angeordnet werden. Alternativ ist aber auch eine direkte Nebeneinanderanordnung der Leistungsmodule, z.B. in einem Schaltschrank möglich, d.h. es können somit flexibel eine größere Anzahl entweder räumlich eng nebeneinander liegender als auch räumlich weit auseinander verteilter Heizelemente durch jeweils am Ort der Heizelementes angeordnete Leitungsmodule gesteuert und/der geregelt werden.

In das Leistungsmodul sind dabei auch schon die Schaltelemente für die Heizelemente integriert, so dass keine zusätzlichen separaten Schaltelemente mit zusätzlicher Verkabelung für den Spannungsversorgungsanschluss, die Ansteuerung und die Überwachung benötigt und montiert werden müssen.

Die Kommunikationsschnittstellen und die Kommunikationseinheit dienen zur Kommunikation mit einem Schnittstellenmodul, von dem insbesondere Sollwerte für die Heizleistung empfangen werden können. Die Spannungsversorgungsschnittstellen dienen zur internen Spannungsversorgung des Moduls. Über die Kommunikationsschnittstellen und die Spannungsversorgungsschnittstellen können dabei bezüglich der internen Kommunikation und der internen Spannungsversorgung eine Anzahl von Leistungsmodule in Serie geschaltet und diese Serienschaltung eingangsseitig mit einem Schnittstellenmodul verbunden werden. Die Spannungsversorgung und die Vorgabe von Sollwerten für die Heizleistung können dann zentral über das Schnittstellenmodul erfolgen. Durch die Serienschaltung der Module wird für die meisten Anwendungsfälle im Vergleich zu einer Parallelschaltung der Verkabelungsaufwand reduziert.

Die Leistungsversorgung der Heizelemente muss dagegen nicht zentral über eine Serienschaltung von Schnittstellenmodul und Leistungsmodul(en) erfolgen, sondern deren Bereitstellung kann dezentral jeweils direkt vor Ort bei den Heizelementen erfolgen. Es ist somit keine Leistungskabelverlegung zu einem Schnittstellenmodul bzw. einem zugeordneten Schaltschrank notwendig. Auch hierdurch kann der Verkabelungsaufwand klein gehalten werden.

Da das Schnittstellenmodul die Ansteuerung einer Vielzahl von Leistungsmodulen und somit Heizelementen übernehmen kann, muss eine übergeordnete Steuerungs- und/oder Regelungseinrichtung zur Vorgabe von Sollwerten für die Heizleistung nur mit dem Schnittstellenmodul und nicht mit sämtlichen Leistungsmodulen kommunizieren, wodurch der Steuer- und/oder Regelungsaufwand in der übergeordneten Steuerungs- und/oder Regelungseinrichtung klein gehalten werden kann.

Die in die Abzweige zu den Heizelementausgängen geschalteten Schaltelemente sind bevorzugt als Halbleiterschalter (z.B. als Solid-State-Relay) ausgebildet. Hierdurch kann eine präzise und verlustarme Steuerung und/oder Regelung der Schaltzustände und somit der von den Heizelementen abgegeben Heizleistung beispielsweise mit Hilfe einer Phasenanschnittsteuerung oder einer Halbwellensteuerung erfolgen.

In einer vorteilhaften Ausgestaltung weist das Leistungsmodul zusätzlich im Gehäuse noch zumindest einen Eingang zum Anschluss eines Temperatursensors auf und die Steuer- und/oder Regeleinheit ist derart ausgebildet, dass sie eine Temperaturinformation von diesem Temperatursensor erfasst. Der Temperatursensor kann beispielsweise die Temperatur eines Heizelements oder eines wärmebehandelten Produktes messen. Das Gehäuse kann dabei auch Anschlüsse für eine Vielzahl von Temperatursensoren aufweisen, z.B. für jeweils einen Temperatursensor für jedes der Heizelemente. Die Temperaturinformation kann dann direkt vor Ort in dem Leistungsmodul durch die Steuer- und/oder Regeleinheit zur Optimierung der Steuerung und/oder Regelung der Heizleistung auf einen Sollwert genutzt werden. Alternativ kann die Steuer- und/oder Regeleinheit die Temperaturinformation an die Kommunikationseinheit übergeben. Die Kommunikationseinheit ist dann derart ausgebildet, dass sie diese Temperaturinformation über eine der Kommunikationsschnittstellen an ein Schnittstellenmodul sendet. Die Wahl der Kommunikationsschnittstelle ist dabei abhängig von der Konfiguration der Verbindung der Schnittstellen der Module (z.B. linear oder ringförmig).

Die Temperaturinformation kann dann entweder im Schnittstellenmodul oder - nach einer Übertragung von dem Schnittstellenmodul an eine übergeordnete Steuerungs- und/oder Regelungseinrichtung - von der übergeordneten Steuerungs- und/oder Regelungseinrichtung zur Verbesserung der Steuerung und/oder Regelung der Heizleistungen genutzt werden. Die Übertragung der Temperaturinformation an das Schnittstellenmodul erfolgt somit über die Serienschaltung der Leitungsmodule, so dass hierzu keine separate Verkabelung zwischen dem Schnittstellenmodul und jedem der Leistungsmodule notwendig ist.

In einer vorteilhaften Ausgestaltung des Leistungsmoduls weist das Gehäuse zusätzlich noch zumindest einen Eingang zum Anschluss eines Strom- und/oder Spannungssensors auf und die Steuer- und/oder Regeleinheit ist derart ausgebildet, dass sie eine Strom- und/oder Spannungsinformation von diesem Sensor erfasst. Mit dem Strom- und/oder Spannungssensor kann beispielsweise der Strom durch ein Heizelement, die Spannung an einem Heizelement, der Strom in der Spannungsversorgung der Heizelemente oder die Spannung der Spannungsversorgung der Heizelemente gemessen werden. Das Gehäuse kann dabei auch Anschlüsse für eine Vielzahl von Strom- und/oder Spannungssensoren aufweisen, z.B. für jeweils einen Strom- und/oder Spannungssensor für jedes der Heizelemente. Die Strom- und/oder Spannungsinformation kann dann direkt vor Ort in dem Leistungsmodul durch die Steuer- und/oder Regeleinheit zur Optimierung der Steuerung und/oder Regelung der Heizleistung auf einen Sollwert genutzt werden. Alternativ oder ergänzend kann die Steuer- und/oder Regeleinheit die Strom- und/oder Spannungsinformation an die Kommunikationseinheit übergeben. Die Kommunikationseinheit ist dann derart ausgebildet, dass sie diese Information über eine der Kommunikationsschnittstellen an ein Schnittstellenmodul sendet.

Die Strom- und/oder Spannungsinformation kann dann entweder im Schnittstellenmodul oder - nach einer Übertragung von dem Schnittstellenmodul an eine übergeordnete Steuerungs- und/oder Regelungseinrichtung - von der übergeordneten Steuerungs- und/oder Regelungseinrichtung zur Verbesserung der Steuerung und/oder Regelung der Heizleistungen genutzt werden. Die Übertragung der Strom- und/oder Spannungsinformation an das Schnittstellenmodul erfolgt somit über die Serienschaltung der Leitungsmodule, so dass hierzu keine separate Verkabelung zwischen dem Schnittstellenmodul und jedem der Leistungsmodule notwendig ist.

Die Anschlüsse für den zumindest einen Temperatursensor und den zumindest einen Strom- und/oder Spannungssensors, vorzugsweise auch von Einrichtungen des Leistungsmoduls zur Erfassung und Vorverarbeitung der Messwerte, können auch in einem separaten Peripheriemodul zusammengefasst sein, das - bei einem Bedarf nach derartigen Messwerten - mit dem Leistungsmodul mechanisch und elektrisch verbindbar ist (z.B. auf das Leistungsmodul aufsteckbar oder in das Leistungsmodul einsteckbar ist). Dieses separate Peripheriemodul kann zusätzlich auch noch digitale Eingänge für die Erfassung zusätzlicher Informationen (z.B. von einer Not-Aus-Einrichtung) durch die Steuer- und/oder Regeleinheit und/oder digitale Ausgänge (z.B. zur Ansteuerung von Leuchtmeldern) durch die Steuer- und/oder Regeleinheit umfassen.

Bevorzugt ist die Steuer- und/oder Regeleinheit auch derart eingerichtet, dass sie die Schaltelemente und Leitungsschutzelemente der Stromverteilungseinrichtung überwacht und Fehler über die Kommunikationseinheit und eine der Kommunikationsschnittstellen an ein Schnittstellenmodul meldet.

Gemäß einer weiteren vorteilhaften Ausgestaltung weist das Leistungsmodul eine Messeinrichtung zur Messung einer an dem Leistungseingang anliegenden Spannung auf und die Steuer- und/oder Regeleinheit ist mit der Messeinrichtung verbunden und derart eingerichtet, dass sie mit dem gemessenen Wert der an dem Leistungseingang anliegenden Spannung die von der Kommunikationseinheit empfangenen oder daraus abgeleitete Sollwerte korrigiert, um Spannungsschwankungen auszugleichen.

Gemäß einer weiteren vorteilhaften Ausgestaltung des Leistungsmoduls
- weist das Gehäuse zumindest einen Lüfterausgang zum elektrischen Anschluss eines Lüfters auf,
- ist die Stromverteilungseinrichtung ausgangsseitig über einen Abzweig elektrisch mit dem Lüfterausgang verbunden, um diesen mit elektrischem Strom aus der Spannungsversorgung zu versorgen, wobei in den Abzweig ein Schaltelement geschaltet ist,
- ist die Kommunikationseinheit derart eingerichtet, dass sie für das Leistungsmodul bestimmte Lüfter-Steuerbefehle und/oder -sollwerte über die erste Kommunikationsschnittstelle empfängt und an die Steuer- und/oder Regeleinheit übergibt und über die erste Kommunikationsschnittstelle empfangene und nicht für das Leistungsmodul bestimmte Lüfter-Steuerbefehle und/oder -sollwerte an die zweite Kommunikationsschnittstelle weiterleitet,
- ist die Steuer- und/oder Regeleinheit derart eingerichtet, dass sie den Schaltzustand des Schaltelementes, das in den Abzweig zu dem Lüfterausgang geschaltet ist, in Abhängigkeit von den von der Kommunikationseinheit empfangenen Lüfter-Steuerbefehlen und/oder -sollwerten steuert und/oder regelt.

Es sind dann sowohl alle für die Versorgung und Ansteuerung der Heizelemente notwendigen Komponenten als auch alle für die Versorgung und Ansteuerung des Lüfters notwendigen Komponenten in ein einziges Gerät in Form des Leistungsmoduls integriert. Es kann somit in hohem Maße Verdrahtungsaufwand und Platz in der Anlage, und dabei vor allem auch im Hauptschaltschrank, sowie damit zusammenhängender Montageaufwand eingespart werden. Beispielsweise können lange Versorgungsleitungen vom Hauptschaltschrank zu dem Lüfter entfallen. Auch die Absicherung dieser Leitungen im Hauptschaltschrank kann entfallen, da sie ebenfalls in das Leistungsmodul integriert werden kann.

Gemäß einer weiteren vorteilhaften Ausgestaltung ist das Gehäuse des Leistungsmoduls in Schutzart IP 65 oder besser ausgebildet ist und kann dann in rauer industrieller Umgebung direkt vor Ort bei den Heizelementen angeordnet werden.

Für eine einfache Montage sind die Schnittstellen und Ein- und Ausgänge vorzugsweise als Steckverbindungen ausgebildet.

Ein erfindungsgemäßes Schnittstellenmodul für eine Heizungssteuerung und/oder -regelung weist auf:
- eine erste Kommunikationsschnittstelle zum Anschluss an ein übergeordnetes Kommunikationssystem,
- eine zweite Kommunikationsschnittstelle, die mit einer ersten Kommunikationsschnittstelle (3) eines Leistungsmoduls (1) verbindbar ist,
- eine erste Spannungsversorgungsschnittstelle (35), die mit einer externen Spannungsversorgung (39) verbindbar ist,
- eine zweite Spannungsversorgungsschnittstelle, die mit einer ersten Spannungsversorgungsschnittstelle eines Leistungsmoduls verbindbar ist,
- eine Kommunikations- und Steuereinheit, die derart ausgebildet ist, dass sie
   a) Sollwerte für die Heizleistung von Heizelementen über die erste Kommunikationsschnittstelle empfängt,
   b) diese Sollwerte Leistungsmodulen zuordnet,
   c) diese Sollwerte oder daraus abgeleitete Sollwerte zusammen mit einer Information über das jeweils zugeordnete Leistungsmodul über die zweite Kommunikationsschnittstelle an die Leistungsmodule senden.

Das Schnittstellenmodul dient somit als zentrale Schnittstelle für die Ansteuerung einer Vielzahl von Leistungsmodulen durch ein übergeordnetes Kommunikationssystem, z.B. von einer übergeordneten Steuerungs- und/oder Regelungseinrichtung. Es kann über seinen Spannungsversorgungsausgang von zentraler Stelle aus eine interne Spannungsversorgung für eine Vielzahl von Leistungsmodulen zur Verfügung stellen, wobei die Spannungsversorgung dann mit geringem Verkabelungsaufwand über die Serienschaltung der Spannungsversorgungsschnittstellen der Leistungsmodule erfolgen kann. Es kann über seine zweite Kommunikationsschnittstelle auch von zentraler Stelle aus eine Erzeugung und Verteilung von Sollwerten für die Schaltelemente ermöglichen, wobei die Übertragung der Sollwerte dann mit geringem Verkabelungsaufwand über die Serienschaltung der Kommunikationsschnittstellen der Leistungsmodule erfolgen kann. Die Sollwerte können dabei ohne weitere Umwandlung an die Leistungsmodule weitergeleitet werden, es kann aber auch schon eine erste Vorverarbeitung erfolgen, die dazu führt dass aus den ursprünglich erhaltenen Sollwerten dann geänderte Sollwerte abgeleitet werden. Insbesondere können bei der Ableitung geänderter Sollwerte dabei auch Zeitversätze beim Einschalten der Heizelemente verschiedener Module berücksichtigt werden, um die Einschaltströme zu begrenzen.

Die Information über das jeweils zugeordnete Leistungsmodul kann beispielsweise über eine Zuordnung der Leistungsmodule zu Adressen bei deren Erstinbetriebnahme erfolgen.

Gemäß einer vorteilhaften Ausgestaltung weist das Schnittstellenmodul einen Fehlerspeicher auf und die Kommunikations- und Steuereinheit ist derart ausgebildet, dass sie von Leistungsmodulen empfangene Fehlermeldungen in diesem Fehlerspeicher abspeichert. Die Fehlermeldungen sämtlicher Leistungsmodule sowie zusätzlich auch des Schnittstellenmoduls können dann von dieser zentralen Stelle (z.B. von einer übergeordneten Steuer- und/oder Regelungseinrichtung) ausgelesen und ausgewertet werden.

Von Vorteil ist die Kommunikations- und Steuereinheit derart ausgebildet, dass sie von Leistungsmodulen empfangene Temperaturinformationen und/oder Spannungsinformationen bei der Ableitung von Sollwerten berücksichtigt und/oder über die erste Kommunikationsschnittstelle an eine übergeordnete Steuerungs- und/oder Regelungseinrichtung sendet. Die Steuerung und/oder Regelung der Heizleistung der Heizelemente auf die Sollwerte kann somit verbessert werden.

Für eine einfache Montage sind die Schnittstellen des Schnittstellenmoduls vorzugsweise als Steckverbindungen ausgebildet.

Gemäß einer weiteren vorteilhaften Ausgestaltung ist das Gehäuse des Schnittstellenmoduls in Schutzart IP 65 oder besser ausgebildet und kann dann außerhalb eines Schaltschrankes in rauer industrieller Umgebung direkt vor Ort bei den Heizelementen angeordnet werden.

In einer weiteren vorteilhaften Ausgestaltung weist das Schnittstellenmodul zusätzlich am Gehäuse noch zumindest einen Eingang zum Anschluss eines Temperatursensors auf und die Kommunikations- und Steuereinheit ist derart ausgebildet, dass sie eine Temperaturinformation von diesem Temperatursensor erfasst. Der Temperatursensor kann beispielsweise die Temperatur eines Heizelements oder eines wärmebehandelten Produktes messen. Das Gehäuse kann dabei auch Anschlüsse für eine Vielzahl von Temperatursensoren aufweisen, z.B. für jeweils einen Temperatursensor für jedes der Heizelemente. Die Temperaturinformation kann dann direkt vor Ort in dem Schnittstellenmodul durch die Kommunikations- und Steuereinheit zur Optimierung der Steuerung und/oder Regelung der Heizleistung auf einen Sollwert genutzt werden. Alternativ oder ergänzend kann die Kommunikations- und Steuereinheit die Temperaturinformation über die zweite Kommunikationsschnittstellen an die Leistungsmodule übergeben, wo sie dann zur Optimierung der Steuerung und/oder Regelung der Heizleistung verwendet werden können. Alternativ oder ergänzend kann die Kommunikations- und Steuereinheit die Temperaturinformation über die erste Kommunikationsschnittstelle an eine übergeordnete Steuerungs- und/oder Regelungseinrichtung übergeben, wo sie dann zur Optimierung der Steuerung und/oder Regelung der Heizleistung verwendet werden kann.

In einer weiteren vorteilhaften Ausgestaltung des Schnittstellenmoduls weist das Gehäuse zusätzlich noch zumindest einen Eingang zum Anschluss eines Strom- und/oder Spannungssensors auf und die Kommunikations- und Steuereinheit ist derart ausgebildet, dass sie eine Strom- und/oder Spannungsinformation von diesem Sensor erfasst. Mit dem Strom- und/oder Spannungssensor kann beispielsweise der Strom durch ein Heizelement, die Spannung an einem Heizelement, der Strom in der Spannungsversorgung der Heizelemente oder die Spannung der Spannungsversorgung der Heizelemente gemessen werden. Das Gehäuse kann dabei auch Anschlüsse für eine Vielzahl von Strom- und/oder Spannungssensoren aufweisen, z.B. für jeweils einen Strom- und/oder Spannungssensor für jedes der Heizelemente. Die Strom- und/oder Spannungsinformation kann dann direkt vor Ort in dem Schnittstellenmodul durch die Kommunikations- und Steuereinheit zur Optimierung der Steuerung und/oder Regelung der Heizleistung auf einen Sollwert genutzt werden. Alternativ oder ergänzend kann die Kommunikations- und Steuereinheit die Strom- und/oder Spannungsinformation über die zweite Kommunikationsschnittstelle an die Leistungsmodule übergeben, wo sie dann zur Optimierung der Steuerung und/oder Regelung der Heizleistung verwendet werden können. Alternativ oder ergänzend kann die Kommunikations- und Steuereinheit die Strom- und/oder Spannungsinformation über die erste Kommunikationsschnittstelle an eine übergeordnete Steuerungs- und/oder Regelungseinrichtung übergeben, wo sie dann zur Optimierung der Steuerung und/oder Regelung der Heizleistung verwendet werden kann.

Die Anschlüsse für den zumindest einen Temperatursensor und den zumindest einen Strom- und/oder Spannungssensors, vorzugsweise auch von Einrichtungen des Schnittstellenmoduls zur Erfassung und Vorverarbeitung der Messwerte, können auch in einem separaten Peripheriemodul zusammengefasst sein, das - bei einem Bedarf nach derartigen Messwerten - mit dem Schnittstellenmodul mechanisch und elektrisch verbindbar ist (z.B. auf das Schnittstellenmodul aufsteckbar oder in das Schnittstellenmodul einsteckbar ist). Dieses separate Peripheriemodul kann zusätzlich auch noch digitale Eingänge für die Erfassung zusätzlicher Informationen (z.B. von einer Not-Aus-Einrichtung) durch die Kommunikations- und Steuereinheit und/oder digitale Ausgänge (z.B. zur Ansteuerung von Leuchtmeldern) durch die Kommunikations- und Steuereinheit umfassen.

Vorzugsweise ist das zusätzlich Peripheriemodul identisch ausgebildet wie das mit den Leistungsmodulen verbindbare zusätzlich Peripheriemodul und auch die Schnittstelle auf Seite des Schnittstellenmoduls ist identisch ausgebildet wie die auf Seite des Leistungsmoduls. Die zusätzlichen Peripheriemodule sind dann flexibel sowohl mit den Schnittstellenmodulen als auch mit den Leistungsmodulen verbindbar.

Ein erfindungsgemäßes System zur Heizungssteuerung und/oder - regelung umfasst zumindest ein vorstehend beschriebenes Leistungsmodul und ein vorstehend beschriebenes Schnittstellenmodul, wobei die Module ausgehend von dem Schnittstellenmodul über ihre Spannungsversorgungsschnittstellen (zur Weiterleitung einer internen Versorgungsspannung) und ihre Kommunikationsschnittstellen (zur Weiterleitung von Sollwerten für eine Heizleistung von Heizelementen) in Serie geschaltet sind.

Von Vorteil ist das zumindest ein Leistungsmodul dabei räumlich entfernt bzw. abgesetzt von dem Schnittstellenmodul in unmittelbarer räumlicher Nähe zu von ihm zu steuernden und/oder zu regelnden Heizelementen angeordnet.

Bevorzugt sind die Verbindungsleitungen zwischen zwei der in Serie geschalteten Module in einem einzigen, vorzugsweise geschirmten und vorzugsweise steckbaren, Kabel zusammengefasst.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: ein Blockschaltbild einer einfachen Ausführungsform eines Leistungsmoduls,
- FIG 2: ein Blockschaltbild eines Leistungsmoduls mit zusätzlichen Ein-/Ausgängen,
- FIG 3: ein Blockschaltbild einer einfachen Ausführungsform eines Schnittstellenmoduls,
- FIG 4: ein Blockschaltbild eines Schnittstellenmoduls mit zusätzlichen Ein-/Ausgängen,
- FIG 5: ein Blockschaltbild eines erfindungsgemäßen Systems zur Heizungssteuerung und/oder -regelung.

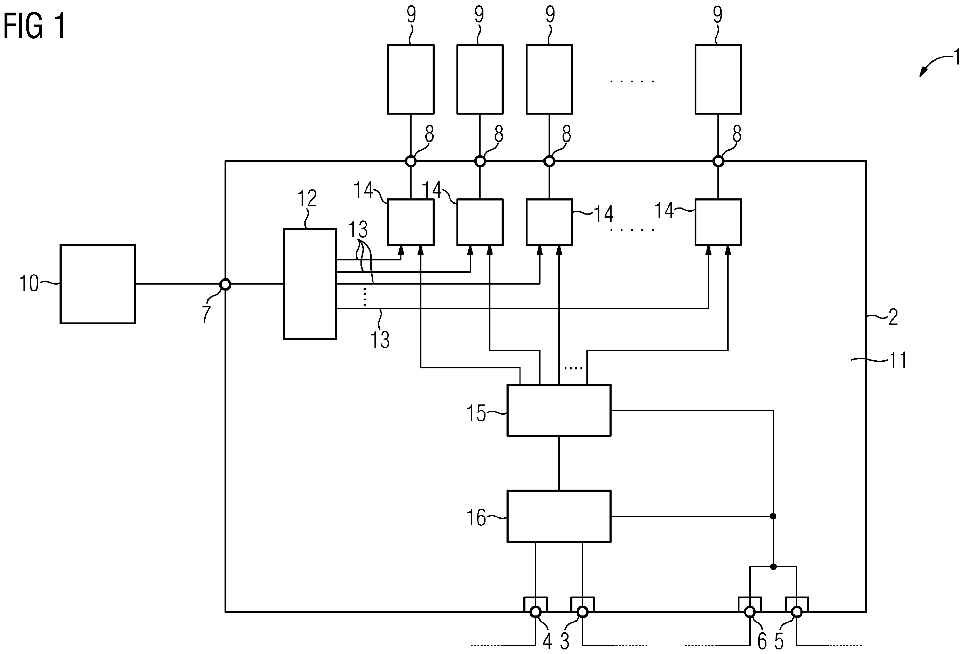

Ein in FIG 1 dargestelltes Leistungsmodul 1 für eine Heizungssteuerung und/oder -regelung weist ein Gehäuse 2 mit einer ersten Kommunikationsschnittstelle 3 und einer zweiten Kommunikationsschnittstelle 4, einer ersten Spannungsversorgungsschnittstelle 5 und einer zweiten Spannungsversorgungsschnittstelle 6, einen Leistungseingang 7 und mehrere (z.B. neun) Leistungsausgänge 8 auf.

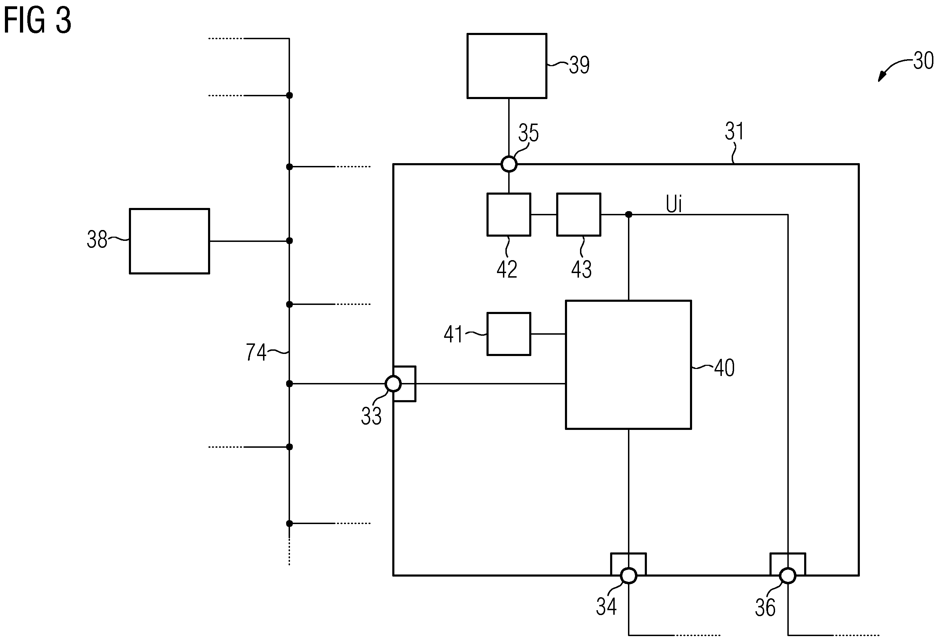

Die erste Kommunikationsschnittstelle 3 ist mit einer zweiten Kommunikationsschnittstelle eines anderen Leistungsmoduls oder eines in FIG 3 gezeigten Schnittstellenmoduls und die zweite Kommunikationsschnittstelle 6 ist mit einer ersten Kommunikationsschnittstelle eines anderen Leistungsmoduls verbindbar.

Die erste Spannungsversorgungsschnittstelle 5 und die zweite Spannungsversorgungsschnittstelle 6 dienen zur (internen) Spannungsversorgung des Leistungsmoduls 1 (beispielsweise der Modulelektronik) mit einer Gleichspannung von beispielsweise 24Vdc, wobei die erste Spannungsversorgungsschnittstelle 5 mit einer zweiten Spannungsversorgungsschnittstelle eines anderen Leistungsmoduls oder eines in FIG 3 gezeigten Schnittstellenmoduls und die zweite Spannungsversorgungsschnittstelle 6 mit einer ersten Spannungsversorgungsschnittstelle eines anderen Leistungsmoduls verbindbar ist.

An die Leistungsausgänge 8 ist jeweils ein Heizelement 9, insbesondere jeweils ein Heizstrahler, elektrisch anschließbar. Die elektrische Leistung jedes der Heizstrahler beträgt beispielsweise zwischen 0.5 und 5 kW.

Der Leistungseingang 7 ist elektrisch an eine externe Spannungsversorgung 10 (z.B. mit einer Nennspannung von 400Vac) für die Heizelemente 9 anschließbar.

Das Leistungsmodul 1 weist weiterhin eine Stromverteilungseinrichtung 12 mit nicht näher dargestellten Leitungsschutzelementen auf, die eingangsseitig elektrisch mit dem Leistungseingang 7 und ausgangsseitig über jeweils einen Abzweig 13 elektrisch mit den Leistungsausgängen 8 verbunden ist, um diese mit elektrischem Strom aus der Spannungsversorgung 10 zu versorgen. In jeden der Abzweige 13 ist jeweils ein Schaltelement 14 geschaltet. Als Schaltelement 14 kommt vorzugsweise ein Halbleiterschalter (z.B. ein sogenanntes "Solid-State-Relay") zum Einsatz.

Das Leistungsmodul 1 weist weiterhin eine Steuer- und/oder Regeleinheit 15 und eine Kommunikationseinheit 16 auf.

Die Steuer- und/oder Regeleinheit 15 ist derart eingerichtet, dass sie den Schaltzustand der Schaltelemente 14 in Abhängigkeit von Sollwerten für die Heizleistung steuert und/oder regelt.

Die Sollwerte können beispielsweise in Form von absoluten Sollwerten, auf eine maximale Leistung oder auf eine Nennleistung bezogenen Sollwerten für die Heizleistung vorliegen. Aus diesen Sollwerten werden dann durch die Steuer- und/oder Regeleinheit 15 mit Hilfe eines vorgegebenen Steuer- und/oder Regelungsalgorithmus Ansteuersignale für die Schaltelemente 14 abgeleitet. Die Sollwerte können aber auch schon in Form von Pulspaketen oder Prozentwerten an Halbwellen pro Sekunde vorliegen, aus denen dann direkt Ansteuersignale für die Schaltelemente 14 abgeleitet werden können. Über die Ansteuersignale werden dann die Schaltzustände der Schaltelemente 14 und damit die Heizleistung der Heizelemente 9 gesteuert und/oder geregelt.

Die Ansteuerung der Schaltelemente 14 und somit die Steuerung oder Regelung des Schaltzustandes bzw. der Heizleistung kann beispielsweise mit einer Phasenanschnittsteuerung oder einer Halbwellensteuerung erfolgen.

Die Kommunikationseinheit 16 ist derart eingerichtet, dass sie für das Leistungsmodul 1 bestimmte Sollwerte über die erste Kommunikationsschnittstelle 3 empfängt und an die Steuer- und/oder Regeleinheit 15 übergibt und über die erste Kommunikationsschnittstelle 3 empfangene und nicht für das Leistungsmodul 1 bestimmte Sollwerte an die zweite Kommunikationsschnittstelle 4 weiterleitet.

Die Stromverteilungseinrichtung 12, die Abzweige 13, die Schaltelemente 14, die Steuer- und/oder Regeleinheit 15 und die Kommunikationseinheit 16 sind von dem Gehäuse 2 umgeben und dadurch geschützt. Vorzugsweise ist das Gehäuse in Schutzart IP 65 oder besser ausgebildet und das Leistungsmodul 1 somit für den industriellen Einsatz im Feld unter rauen Umgebungsbedingungen geeignet.

Die Steuer- und/oder Regeleinheit 15 kann dabei auch derart ausgebildet sein, dass sie die Schaltelemente 14 und nicht näher dargestellte Leitungsschutzelemente (z.B. Sicherungen) der Stromverteilungseinrichtung 12 überwacht und Fehlerinformationen an die Kommunikationseinheit 16 übergibt. Die Kommunikationseinheit 16 ist dann derart ausgebildet, dass sie diese Fehlerinformationen über eine der Kommunikationsschnittstellen 3, 4 an ein Schnittstellenmodul sendet.

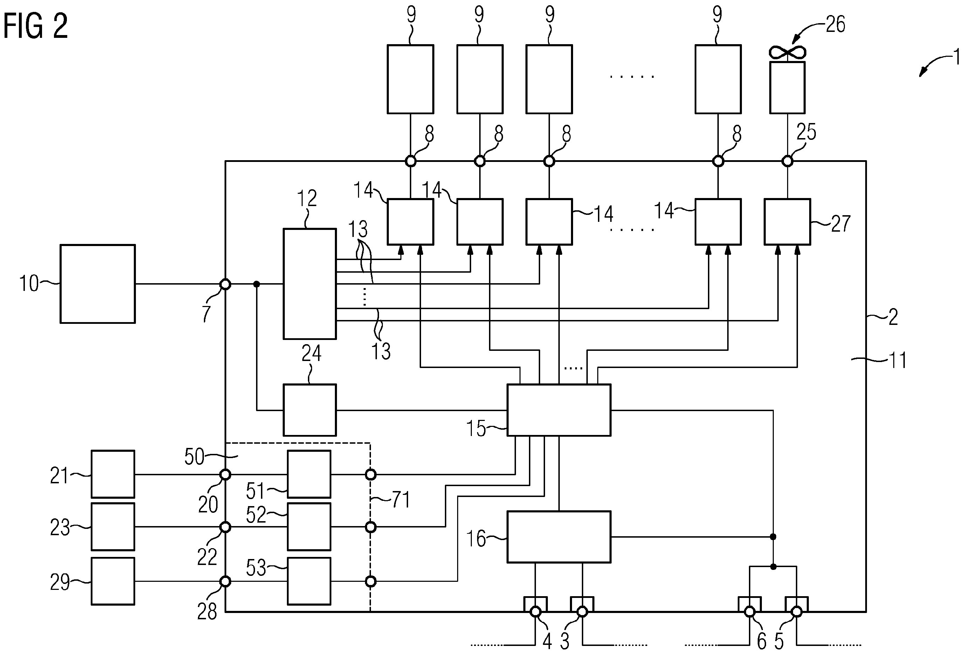

Wie anhand FIG 2 dargestellt ist, kann das Leistungsmodul 1 wahlweise noch zusätzliche weitere Eingänge, Komponenten und Funktionalitäten aufweisen.

Das Leistungsmodul 1 kann beispielsweise ermöglichen, dass Istwerte von Temperaturen, z. B. der Temperatur eines oder mehrerer Heizelemente 9, oder eines wärmebehandelten Produktes, bei der Steuerung und/oder Regelung der Heizleistung der Heizelemente 9 auf einen Sollwert berücksichtigt werden. Das Gehäuse 2 kann hierzu beispielsweise zumindest einen Eingang 20 zum Anschluss eines Temperatursensors 21 aufweisen. Die Steuer- und/oder Regeleinheit 15 ist dann bevorzugt derart ausgebildet, dass sie eine Temperaturinformation von diesem Temperatursensor 21 erfasst. Diese Temperaturinformation kann dann direkt vor Ort von der Steuer- und/oder Regeleinheit 15 in dem Leistungsmodul 1 zur Steuerung und/oder Regelung der Heizleistung verwendet werden, oder aber an die Kommunikationseinheit 16 übergeben werden, welche diese Temperaturinformation über eine der Kommunikationsschnittstellen 3, 4 an ein Schnittstellenmodul sendet.

Das Leistungsmodul 1 kann auch ermöglichen, dass Istwerte von Strömen oder Spannungen, z.B. von Heizelementen 9 oder der Spannungsversorgung 10, bei der Steuerung und/oder Regelung der Heizleistung der Heizelemente 9 auf einen Sollwert berücksichtigt werden. Das Gehäuse 2 weist hierzu dann zumindest einen Eingang 22 zum Anschluss eines Strom-und/oder Spannungssensors 23 auf, der eine an einem Heizelement 9 anliegende Spannung und/oder einen durch das Heizelement 9 fließenden Strom misst und die Steuer- und/oder Regeleinheit 15 ist dann bevorzugt derart ausgebildet, dass sie eine Strom- und/oder Spannungsinformation von diesem Sensor 23 erfasst. Diese Strom- und/oder Spannungsinformation kann dann direkt vor Ort von der Steuer- und/oder Regeleinheit 15 in dem Leistungsmodul 1 zur Steuerung und/oder Regelung der Heizleistung verwendet werden, oder aber an die Kommunikationseinheit 16 übergeben werden, welche diese Strom- und/oder Spannungsinformation über eine der Kommunikationsschnittstellen 3, 4 an ein Schnittstellenmodul sendet.

Die Anschlüsse 20, 22 für den zumindest einen Temperatursensor 21 und den zumindest einen Strom- und/oder Spannungssensors 23, vorzugsweise auch zugehörige Einrichtungen 51, 52 zur Erfassung und Vorverarbeitung der Messwerte, können in einem separaten Peripheriemodul 50 zusammengefasst sein, das - bei einem Bedarf nach derartigen Messwerten - mit dem Leistungsmodul 2 über eine Schnittstelle 71 mechanisch und elektrisch verbindbar ist (z.B. durch Aufstecken oder Einstecken). Dieses separate Peripheriemodul 50 kann zusätzlich auch noch digitale Eingänge für die Erfassung zusätzlicher Informationen durch die Steuer- und/oder Regeleinheit 15 und/oder digitale Ausgänge (z.B. zur Ansteuerung von Leuchtmeldern) durch die Steuer- und/oder Regeleinheit 15 umfassen. Beispielhaft ist ein digitaler Eingang 28 zur Erfassung eines Not-Aus-Signals von einer Not-Aus-Einrichtung 29 mit einer zugehörigen Einrichtung 53 zur Erfassung und Vorverarbeitung des Eingangssignals dargestellt.

Das Leistungsmodul 1 kann auch eine Kompensation von Schwankungen in der Spannung am Leistungseingang 7 ermöglichen. Hierzu kann das Leistungsmodul 1 eine Messeinrichtung 24 zur Messung der an dem Leistungseingang 7 anliegenden Spannung aufweisen. Die Steuer- und/oder Regeleinheit 15 ist dann mit der Messeinrichtung 24 verbunden und derart eingerichtet, dass sie mit dem gemessenen Wert der an dem Leistungseingang 7 anliegenden Spannung die von der Kommunikationseinheit 16 empfangenen oder daraus abgeleitete Sollwerte korrigiert, um Spannungsschwankungen auszugleichen.

Das Leistungsmodul 1 kann auch eine Ansteuerung eines oder mehrerer Lüfter 26 ermöglichen. Das Gehäuse 2 kann dann zumindest einen Lüfterausgang 25 zum elektrischen Anschluss eines Lüfters 26 aufweisen. Die Stromverteilungseinrichtung 12 ist dabei ausgangsseitig über einen Abzweig 13 elektrisch mit dem Lüfterausgang 25 verbunden, um diesen mit elektrischem Strom aus der Spannungsversorgung 10 zu versorgen, wobei in den Abzweig 13 ein Schaltelement 27 geschaltet ist. Das Schaltelement 27 ist vorzugsweise ein Halbleiterschalter (z.B. ein sogenanntes "Solid-State-Relay"), oder alternativ ein elektromechanisches Schütz.

Die Kommunikationseinheit 16 ist dann derart eingerichtet, dass sie für das Leistungsmodul 1 bestimmte Lüfter-Steuerbefehle und/oder -sollwerte über die erste Kommunikationsschnittstelle 3 empfängt und an die Steuer- und/oder Regeleinheit 15 übergibt, und über die erste Kommunikationsschnittstelle 3 empfangene und nicht für das Leistungsmodul 1 bestimmte Lüfter-Steuerbefehle und/oder -sollwerte an die zweite Kommunikationsschnittstelle 4 weiterleitet. Die Steuer- und/der Regeleinheit 15 ist dann derart eingerichtet, dass sie den Schaltzustand des Schaltelementes 27, das in den Abzweig 13 zu dem Lüfterausgang 25 geschaltet ist, in Abhängigkeit von den von der Kommunikationseinheit 16 empfangenen Lüfter-Steuerbefehlen und/oder -sollwerten steuert und/oder regelt.

Ein in der FIG 3 gezeigtes Schnittstellenmodul 30 für eine Heizungssteuerung und/oder -regelung weist ein Gehäuse 31 mit einer ersten Kommunikationsschnittstelle 33, einer zweiten Kommunikationsschnittstelle 34, einer ersten Spannungsversorgungsschnittstelle 35 und einer zweiten Spannungsversorgungsschnittstelle 36 auf.

Die erste Kommunikationsschnittstelle 33 dient zum Anschluss an ein übergeordnetes offenes Kommunikationssystem 74 wie z.B. PROFIBUS oder PROFINET und der Kommunikation mit einer daran angeschlossenen übergeordneten Steuer- und/oder Regelungseinrichtung 38. Die zweite Kommunikationsschnittstelle 34 ist mit einer ersten Kommunikationsschnittstelle 3 eines Leistungsmoduls 1 (siehe FIG 1 und 2) verbindbar.

Die erste Spannungsversorgungsschnittstelle 35 ist mit einer externen Spannungsversorgung 39 (z.B. 230V ac) verbindbar.

Die zweite Spannungsversorgungsschnittstelle 36 ist mit einer ersten Spannungsversorgungsschnittstelle 5 eines Leistungsmoduls 1 (siehe FIG 1 und 2) verbindbar.

Das Schnittstellenmodul 30 weist, von dem Gehäuse 31 umgeben, eine Kommunikations- und Steuereinheit 40 auf, die derart ausgebildet ist, dass sie
a) Sollwerte für die Steuerung und/oder Regelung der Heizleistung von Heizelementen 9 (siehe FIG 1 und 2) über die erste Kommunikationsschnittstelle 33 empfängt,
b) diese Sollwerte Leistungsmodulen 1 und deren Leistungsausgängen 8 (siehe FIG 1 und 2) zuordnet,
c) diese Sollwerte oder daraus abgeleitet Sollwerte zusammen mit einer Information über das jeweils zugeordnete Leistungsmodul 1 und den jeweils zugeordneten Leistungsausgang 8 dieses Leistungsmoduls 1 über die zweite Kommunikationsschnittstelle 34 an die Leistungsmodule 1 sendet.

Die Zuordnung der Sollwerte zu den Leistungsmodulen 1 kann beispielsweise mit Hilfe von Adressen für die Leistungsmodule 1 erfolgen, die bei der Inbetriebnahme festgelegt werden.

Zusätzlich kann die Kommunikations- und Steuereinheit 40 derart ausgebildet sein, dass sie in analoger Weise
a) Lüfter-Steuerbefehle und/oder -sollwerte für die Steuerung und/oder Regelung von Lüftern 26 (siehe FIG 2) über die erste Kommunikationsschnittstelle 33 empfängt,
b) diese Lüfter-Steuerbefehle und/oder -sollwerte Leistungsmodulen 1 und deren Lüfterausgänge 25 (siehe FIG 2) zuordnet,
c) diese Lüfter-Steuerbefehle und/oder -sollwerte oder daraus abgeleitete Steuerbefehle bzw. Sollwerte zusammen mit einer Information über das zugeordnete Leistungsmodul 1 und den zugeordneten Lüfterausgang 25 dieses Leistungsmoduls 1 über die zweite Kommunikationsschnittstelle 34 an die Leistungsmodule 1 sendet.

Weiterhin weist das Schnittstellenmodul 30 einen Fehlerspeicher 41 auf und die Kommunikations- und Steuereinheit 40 ist derart ausgebildet, dass sie über die zweite Kommunikationsschnittstelle 34 von Leistungsmodulen 1 empfangene Fehlerinformationen sowie selbst erzeugte Fehlerinformationen in diesem Fehlerspeicher 41 abspeichert.

Die Kommunikations- und Steuereinheit 40 ist weiterhin derart ausgebildet, dass sie über die zweite Kommunikationsschnittstelle 34 von Leistungsmodulen 1 empfangene Temperaturinformationen, Strom- und/oder Spannungsinformationen oder andere Eingangssignale (z.B. Not-Aus-Signale) über die erste Kommunikationsschnittstelle 33 und das Kommunikationssystem 37 entweder selbst zur Optimierung der Steuerung und/oder Regelung der Heizleistung oder zur Erzeugung von Steuerbefehlen für die Leistungsmodule 1 (z.B. Zuschalt- oder Abschaltbefehlen für Heizelemente, Ansteuerbefehle für digitale Ausgänge wie z.B. für Leuchtmelder) verwendet, oder diese an die übergeordnete Steuerungs- und/oder Regelungseinrichtung 38 sendet, wo sie dann zur Optimierung der Steuerung und/oder Regelung der Heizleistung oder zur Erzeugung von Steuerbefehlen verwendet werden können.

Die Schnittstellen 33, 34, 35, 36 sind dabei als Steckverbindungen ausgebildet.

Das Gehäuse 31 ist bevorzugt in Schutzart IP 65 oder besser ausgebildet.

Die Spannungsversorgung 39 mit einer Nennspannung von 24 dc dient zur Bereitstellung einer Versorgungsspannung Ui für die Kommunikations- und Steuereinheit 40 sowie die Elektroniken mehrerer (z.B. von maximal acht) Leistungsmodulen 1. Die Spannungsversorgung 39 ist hierzu über die erste Spannungsversorgungsschnittstelle 35, eine Filter-/Schutzschaltung 42 und ggf. einen DC/DC-Wandler 44 sowohl mit der Kommunikations- und Steuereinheit 40 als auch mit der zweiten Spannungsversorgungsschnittstelle 36 verbunden.

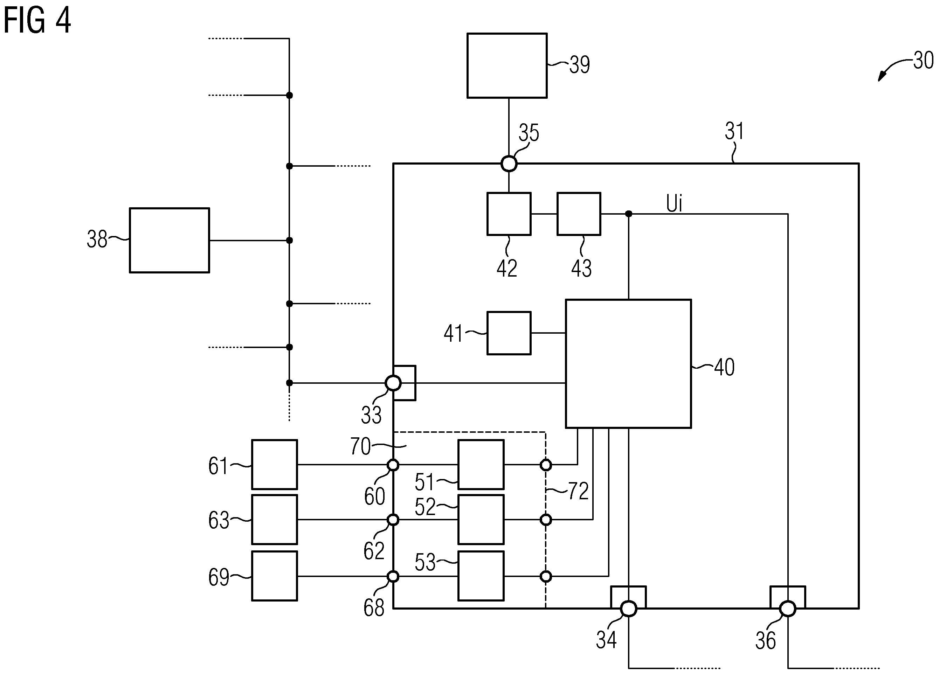

Wie anhand FIG 4 dargestellt ist, kann auch das Schnittstellenmodul 30 wahlweise noch zusätzliche weitere Eingänge, Ausgänge, Komponenten und Funktionalitäten aufweisen.

Das Schnittstellenmodul 30 kann beispielsweise ermöglichen, dass Istwerte von Temperaturen, z.B. der Temperatur eines oder mehrerer Heizelemente 9, oder eines wärmebehandelten Produktes, bei der Steuerung und/oder Regelung der Heizleistung der Heizelemente 9 auf einen Sollwert berücksichtigt werden. Das Gehäuse 31 kann hierzu beispielsweise zumindest einen Eingang 60 zum Anschluss eines Temperatursensors 61 aufweisen. Die Kommunikations- und Steuereinheit 40 ist dann bevorzugt derart ausgebildet, dass sie eine Temperaturinformation von diesem Temperatursensor 21 erfasst. Diese Temperaturinformation kann dann direkt vor Ort von der Kommunikations- und Steuereinheit 40 zur Steuerung und/oder Regelung der Heizleistung (z.B. durch eine Anpassung von Sollwerten) verwendet werden, oder aber über die Kommunikationsschnittstelle 34 an die Leistungsmodule 1 übergeben werden, welche diese Temperaturinformation zur Steuerung und/oder Regelung der Heizleistung verwendet.

Das Schnittstellenmodul 30 kann auch ermöglichen, dass Istwerte von Strömen oder Spannungen, z.B. von Heizelementen oder der Spannungsversorgung, bei der Steuerung und/oder Regelung der Heizleistung der Heizelemente 9 auf einen Sollwert berücksichtigt werden. Das Gehäuse 31 weist hierzu dann zumindest einen Eingang 62 zum Anschluss eines Strom-und/oder Spannungssensors 63 auf, der eine an einem Heizelement 9 anliegende Spannung misst, und die Kommunikations- und Steuereinheit 40 ist dann bevorzugt derart ausgebildet, dass sie eine Strom- und/oder Spannungsinformation von diesem Sensor 63 erfasst. Diese Strom- und/oder Spannungsinformation kann dann direkt vor Ort von der Kommunikations- und Steuereinheit 40 zur Steuerung und/oder Regelung der Heizleistung (z.B. durch eine Anpassung von Sollwerten) verwendet werden, oder aber über die Kommunikationsschnittstelle 34 an die Leistungsmodule 1 übermittelt werden, wo sie zur Steuerung und/oder Regelung der Heizleistung verwendet werden.

Die Anschlüsse 60, 62 für den zumindest einen Temperatursensor 61 und den zumindest einen Strom- und/oder Spannungssensors 63, vorzugsweise auch zugehörige Einrichtungen 51, 52 zur Erfassung und Vorverarbeitung der Messwerte, können in einem separaten Peripheriemodul 70 zusammengefasst sein, das - bei einem Bedarf nach derartigen Messwerten - über eine Schnittstelle 72 mit dem Schnittstellenmodul 30 mechanisch und elektrisch verbindbar ist (z.B. durch Aufstecken oder Einstecken in das Schnittstellenmodul). Dieses separate Modul 70 kann zusätzlich auch noch digitale Eingänge für die Erfassung zusätzlicher Informationen durch die Kommunikations- und Steuereinheit 40 und/oder digitale Ausgänge (z.B. zur Ansteuerung von Leuchtmeldern) durch die Kommunikations- und Steuereinheit 40 umfassen. Beispielhaft ist ein digitaler Eingang 68 zur Erfassung eines Not-Aus-Signals von einer Not-Aus-Einrichtung 69 mit einer zugehörigen Einrichtung 53 zur Erfassung und Vorverarbeitung des Eingangssignals dargestellt.

Vorzugsweise ist - wie hier dargestellt - das zusätzliche Peripheriemodul 70 identisch ausgebildet wie das mit den Leistungsmodulen 1 zusätzlich verbindbare Peripheriemodul 50 und auch die Schnittstelle 72 auf Seite des Moduls 70 ist identisch ausgebildet wie die Schnittstelle 71 auf Seite des Moduls 50. Die zusätzlichen Module 50, 70 sind dann flexibel sowohl mit den Schnittstellenmodulen 30 als auch mit den Leistungsmodulen 1 verbindbar.

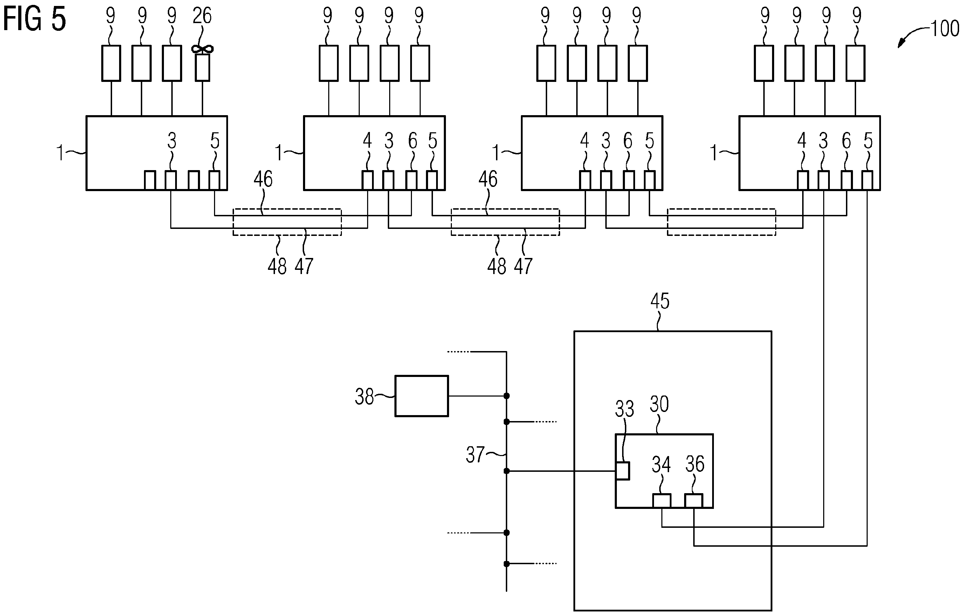

Ein in FIG 5 gezeigtes System 100 zur Heizungssteuerung und/oder -regelung umfasst ein Schnittstellenmodul 30 und mehrere Leistungsmodule 1, wobei die Module 1, 30 ausgehend von dem Schnittstellenmodul 30 über ihre Spannungsversorgungsschnittstellen 36 bzw. 5, 6 (zur Weiterleitung der Versorgungsspannung Ui) und ihre Kommunikationsschnittstellen 34 bzw. 3, 4 (zur Weiterleitung von Steuerbefehlen und von Sollwerten für Heizleistungen der Heizelemente 9 bzw. von Lüfter-Steuerbefehlen oder -sollwerten) in Serie geschaltet sind.

Die Leistungsmodule 1 können dabei im Feld räumlich entfernt voneinander und von dem Schnittstellenmodul 30 in unmittelbarer räumlicher Nähe zu den von ihnen zu steuernden und/oder zu regelnden Heizelementen 9 und/oder Lüftern 26 angeordnet sein. Die Leistungsmodule 1 können dabei in einem Steuer- oder Schaltschrank oder bei einem Gehäuse 2 mit ausreichend hoher Schutzart auch außerhalb eines Steuer- oder Schaltschranks angeordnet sein.

Das Schnittstellenmodul 30 kann in einem Steuer- oder Schaltschrank 45, oder bei einem Gehäuse 31 mit hoher Schutzart auch im Feld in der Nähe von Heizelementen 9 und/oder Lüftern 26 angeordnet sein.

Es können auch das Schnittstellenmodul 30 und das erste nachfolgende Leistungsmodul 1 zusammen in einem Steuer- oder Schaltschrank 45 und die anderen Leistungsmodule 1 im Feld in der Nähe von Heizelementen 9 und/oder Lüftern 26 angeordnet sein.

Bei Bedarf besteht aber flexibel auch die Möglichkeit, die Module direkt nebeneinander, z. B. auf einer gemeinsamen Hutschiene, anzuordnen.

Es können dabei auch flexibel, je nach Bedarf und räumlicher Anordnung der Heizelemente oder Lüfter, Kombinationen von einem oder mehreren Schnittstellenmodulen mit jeweils einem oder mehreren damit in Serie geschalteten Leistungsmodulen gebildet werden.

Die Verbindungsleitungen 46, 47 zwischen zwei in Serie geschalteten Modulen sind vorzugsweise zusammen in einem einzigen, vorzugsweise steckbaren, Kabel 48 zusammengefasst.

Zur Vermeidung von EMV-Störungen in dem Kabel 48, die beispielsweise bei einer Phasenanschnittsteuerung in einem Leistungsmodul 1 entstehen können, ist das Kabel vorzugsweise geschirmt. Zur weiteren Erhöhung der EMV-Festigkeit kann eine Datenübertragung in den Leitungen 47 mit zusätzlichen Schutzmechanismen wie z.B. CRC-Prüfsummen erfolgen.

Die zweite Kommunikationsschnittstellen 34 des Schnittstellenmoduls und die ersten und zweiten Kommunikationsschnittstellen 3, 4 der Leistungsmodule 1 können als Standardschnittstellen, z.B. nach dem RS485 Standard, ausgebildet sein. Die Kommunikation zu der übergeordneten Steuerungs- und/oder -regelungseinrichtung 38 erfolgt vorzugsweise über ein offenes Kommunikationssystem 37 wie z.B. PROFIBUS oder PROFINET. Die Kommunikation zwischen dem Schnittstellenmodul 30 und den Leistungsmodulen 1 kann auch nach einem proprietären Protokoll erfolgen.

## Patentansprüche

1. Leistungsmodul (1) für eine Heizungssteuerung und/oder - regelung mit einem Gehäuse (2) mit
- einer ersten Kommunikationsschnittstelle (3) und einer zweiten Kommunikationsschnittstelle (4), wobei die erste Kommunikationsschnittstelle (3) mit einer zweiten Kommunikationsschnittstelle (4 bzw. 36) eines anderen Leistungsmoduls (1) oder eines Schnittstellenmoduls (30) und die zweite Kommunikationsschnittstelle (4) mit einer ersten Kommunikationsschnittstelle (3) eines anderen Leistungsmoduls (1) verbindbar ist,
- einer ersten Spannungsversorgungsschnittstelle (5) und einer zweiten Spannungsversorgungsschnittstelle (6) zur Spannungsversorgung des Leistungsmoduls (1), wobei die erste Spannungsversorgungsschnittstelle (5) mit einer zweiten Spannungsversorgungsschnittstelle (6) eines anderen Leistungsmoduls (1) oder eines Schnittstellenmoduls (30) und die zweite Spannungsversorgungsschnittstelle (6) mit einer ersten Spannungsversorgungsschnittstelle (5) eines anderen Leistungsmoduls (1) verbindbar ist,
- mehreren Leistungsausgängen (8), an die jeweils ein Heizelement (9), insbesondere jeweils ein Heizstrahler, elektrisch anschließbar ist,
- einem Leistungseingang (7), der elektrisch an eine Spannungsversorgung (10) für die Heizelemente (9) anschließbar ist,
wobei das Leistungsmodul (1), von dem Gehäuse (2) umgeben, aufweist:
- eine Stromverteilungseinrichtung (12), die eingangsseitig elektrisch mit dem Leistungseingang (7) und ausgangsseitig über jeweils einen Abzweig (13) elektrisch mit den Leistungsausgängen (9) verbunden ist, um diese mit elektrischem Strom aus der Spannungsversorgung (10) zu versorgen,
- jeweils ein Schaltelement (14) in jedem der Abzweige (13),
- eine Steuer- und/oder Regeleinheit (15), die derart eingerichtet ist, dass sie den Schaltzustand der Schaltelemente (14) in Abhängigkeit von Sollwerten für eine Heizleistung der Heizelemente (9) steuert und/oder regelt,
- eine Kommunikationseinheit (16), die derart eingerichtet ist, dass sie für das Leistungsmodul (1) bestimmte Sollwerte über die erste Kommunikationsschnittstelle (3) empfängt und an die Steuer- und/oder Regeleinheit (15) übergibt und über die erste Kommunikationsschnittstelle (3) empfangene und nicht für das Leistungsmodul (1) bestimmte Sollwerte an die zweite Kommunikationsschnittstelle (4) weiterleitet.

2. Leistungsmodul (1) nach Anspruch 1,
**dadurch gekennzeichnet, dass**
- das Gehäuse (2) zumindest einen Eingang 20) zum Anschluss eines Temperatursensors (21) aufweist,
- die Steuer- und/oder Regeleinheit (15) derart ausgebildet ist, dass sie eine Temperaturinformation von diesem Temperatursensor (21) erfasst.

3. Leistungsmodul (1) nach Anspruch 1 oder 2,
**dadurch gekennzeichnet, dass**
- das Gehäuse (2) zumindest einen Eingang (22) zum Anschluss eines Strom/-Spannungssensors (23) aufweist,
- die Steuer- und/oder Regeleinheit (15) derart ausgebildet ist, dass sie eine Spannungsinformation von diesem Spannungssensor (23) erfasst.

4. Leistungsmodul (1) nach einem der vorhergehenden Ansprüche,
**dadurch gekennzeichnet, dass**
- die Steuer- und/oder Regeleinheit (15) derart ausgebildet ist, dass sie die Schaltelemente (14) und Leitungsschutzelemente der Stromverteilungseinrichtung (12) überwacht und Fehlerinformationen an die Kommunikationseinheit (16) übergibt,
- die Kommunikationseinheit (16) derart ausgebildet ist, dass sie diese Fehlerinformationen über eine der Kommunikationsschnittstellen (3, 4) an ein Schnittstellenmodul (30) sendet.

5. Leistungsmodul (1) nach einem der vorhergehenden Ansprüche,
**dadurch gekennzeichnet, dass** es eine Messeinrichtung (24) zur Messung einer an dem Leistungseingang (7) anliegenden Spannung aufweist und dass die Steuer- und/oder Regeleinheit (15) mit der Messeinrichtung (24) verbunden und derart eingerichtet ist, dass sie mit dem gemessenen Wert der an dem Leistungseingang (7) anliegenden Spannung die von der Kommunikationseinheit (16) empfangenen oder daraus abgeleitete Sollwerte korrigiert, um Spannungsschwankungen auszugleichen.

6. Leistungsmodul (1) nach einem der vorhergehenden Ansprüche,
**dadurch gekennzeichnet, dass**
- das Gehäuse (2) zumindest einen Lüfterausgang (25) zum elektrischen Anschluss eines Lüfters (26) aufweist,
- die Stromverteilungseinrichtung (12) ausgangsseitig über einen Abzweig (14) elektrisch mit dem Lüfterausgang (25) verbunden ist, um diesen mit elektrischem Strom aus der Spannungsversorgung (10) zu versorgen, wobei in den Abzweig (14) ein Schaltelement (27) geschaltet ist,
- die Kommunikationseinheit (16) derart eingerichtet ist, dass sie für das Leistungsmodul (1) bestimmte Lüfter-Steuerbefehle und/oder Lüftersollwerte über die erste Kommunikationsschnittstelle (3) empfängt und an die Steuer- und/oder Regeleinheit (15) übergibt und über die erste Kommunikationsschnittstelle (3) empfangene und nicht für das Leistungsmodul (1) bestimmte Lüfter-Steuerbefehle und/oder Lüfter-Sollwerte an die zweite Kommunikationsschnittstelle (4) weiterleitet,
- die Steuer- und/oder Regeleinheit (15) derart eingerichtet ist, dass sie den Schaltzustand des Schaltelementes (27), das in den Abzweig (14) zu dem Lüfterausgang (25) geschaltet ist, in Abhängigkeit von den von der Kommunikationseinheit 16 empfangenen Lüfter-Steuerbefehlen und/oder Lüfter-Sollwerten steuert und/oder regelt.

7. Leistungsmodul (1) nach einem der vorhergehenden Ansprüche,
**dadurch gekennzeichnet, dass** das Gehäuse (2) in Schutzart IP 65 oder besser ausgebildet ist.

8. Leistungsmodul (1) nach einem der vorhergehenden Ansprüche,
**dadurch gekennzeichnet, dass** die Schnittstellen (3, 4, 5, 6) und Ein- und Ausgänge (7, 8, 20, 22, 25) als Steckverbindungen ausgebildet sind.

9. Schnittstellenmodul (30) für eine Heizungssteuerung und/oder -regelung mit
- einer ersten Kommunikationsschnittstelle (33) zum Anschluss an ein übergeordnetes Kommunikationssystem (37),
- einer zweiten Kommunikationsschnittstelle (34), die mit einer ersten Kommunikationsschnittstelle (3) eines Leistungsmoduls (1) verbindbar ist,
- einer ersten Spannungsversorgungsschnittstelle (35), die mit einer externen Spannungsversorgung (39) verbindbar ist,
- einer zweiten Spannungsversorgungsschnittstelle (36), die mit einer ersten Spannungsversorgungsschnittstelle (5) eines Leistungsmoduls (1) verbindbar ist,
- einer Kommunikations- und Steuereinheit (40), die derart ausgebildet ist, dass sie
a) Sollwerte für die Heizleistung von Heizelementen (9) über die erste Kommunikationsschnittstelle (33) empfängt,
b) diese Sollwerte Leistungsmodulen (1) zuordnet,
c) diese Sollwerte oder daraus abgeleitete Sollwerte zusammen mit einer Information über das jeweils zugeordnete Leistungsmodul (1) über die zweite Kommunikationsschnittstelle (34) an die Leistungsmodule (1) sendet.

10. Schnittstellenmodul (30) nach Anspruch 9,
**dadurch gekennzeichnet, dass** es einen Fehlerspeicher (41) aufweist und dass die Kommunikations- und Steuereinheit (40) derart ausgebildet ist, dass sie von Leistungsmodulen (1) empfangene Fehlerinformationen in diesem Fehlerspeicher (41) abspeichert.

11. Schnittstellenmodul (30) nach einem der Ansprüche 9 bis 10,
**dadurch gekennzeichnet, dass** die Kommunikations- und Steuereinheit (40) derart ausgebildet ist, dass sie von Leistungsmodulen (1) empfangene Temperaturinformationen und/oder Spannungsinformationen über die erste Kommunikationsschnittstelle (33) an eine übergeordnete Steuerungs- und/oder Regelungseinrichtung (38) sendet.

12. Schnittstellenmodul (30) nach einem der Anspruch 9 bis 11,
**dadurch gekennzeichnet, dass** die Schnittstellen (33, 34, 35, 36) als Steckverbindungen ausgebildet sind.

13. Schnittstellenmodul (30) nach einem der Anspruch 9 bis 12,
**dadurch gekennzeichnet, dass** es ein Gehäuse (31) in Schutzart IP 65 oder besser aufweist.

14. System (100) zur Heizungssteuerung und/oder -regelung umfassend zumindest ein Leistungsmodul (1) nach einem der Ansprüche 1 bis 8 und ein Schnittstellenmodul (30) nach einem der Ansprüche 9 bis 13,
wobei die Module (1, 30) ausgehend von dem Schnittstellenmodul (30) über ihre Spannungsversorgungsschnittstellen (5, 6, 36) zur Weiterleitung einer Versorgungsspannung (Ui) und ihre Kommunikationsschnittstellen (3, 4, 34) zur Weiterleitung von Sollwerten für Heizelemente (9) in Serie geschaltet sind.

15. System (100) nach Anspruch 14,
**dadurch gekennzeichnet, dass** das zumindest eine Leistungsmodul (1) räumlich entfernt von dem Schnittstellenmodul in unmittelbarer räumlicher Nähe zu von ihm zu steuernden und/oder zu regelnden Heizelementen (9) angeordnet ist.

16. System (100) nach einem der Ansprüche 14 bis 15,
**dadurch gekennzeichnet, dass** Verbindungsleitungen (46, 47) zwischen zwei der in Serie geschalteten Modulen (1, 30) in einem einzigen, vorzugsweise geschirmten und vorzugsweise steckbaren, Kabel (48) zusammengefasst sind.

## Claims

1. Power module (1) for a heating controller and/or regulator, having a housing (2) which comprises
- a first communication interface (3) and a second communication interface (4), wherein the first communication interface (3) can be connected to a second communication interface (4 or 36) of another power module (1) or of an interface module (30), and the second communication interface (4) can be connected to a first communication interface (3) of another power module (1),
- a first voltage supply interface (5) and a second voltage supply interface (6) for the voltage supply of the power module (1), wherein the first voltage supply interface (5) can be connected to a second voltage supply interface (6) of another power module (1) or of an interface module (30) and the second voltage supply interface (6) can be connected to a first voltage supply interface (5) of another power module (1),
- a plurality of power outputs (8) to which a heating element (9) can be electrically attached in each case, in particular a radiant heater in each case,
- a power input (7), which can be electrically attached to a voltage supply (10) for the heating elements (9),
wherein the power module (1) has, enclosed by the housing (2), components as follows:
- a power distribution device (12), which is electrically connected on the input side to the power input (7) and is electrically connected on the output side via a branch (13) in each case to the power outputs (9) in order to supply these with electrical current from the voltage supply (10),
- a switch element (14) in each of the branches (13),
- a control and/or regulation unit (15), which is so configured as to control and/or regulate the switching state of the switch elements (14) as a function of reference values for a heating power of the heating elements (9),
- a communication unit (16), which is so configured as to receive reference values intended for the power module (1) via the first communication interface (3) and to transfer these to the control and/or regulation unit (15), and to forward reference values received via the first communication interface (3) and not intended for the power module (1) to the second communication interface (4).

2. Power module (1) according to claim 1,
**characterised in that**
- the housing (2) has at least one input (20) for attaching a temperature sensor (21),
- the control and/or regulation unit (15) is so designed as to capture temperature information from this temperature sensor (21).

3. Power module (1) according to claim 1 or 2, **characterised in that**
- the housing (2) has at least one input (22) for attaching a current/voltage sensor (23),
- the control and/or regulation unit (15) is so designed as to capture voltage information from this voltage sensor (23) .

4. Power module (1) according to one of the preceding claims,
**characterised in that**
- the control and/or regulation unit (15) is so designed as to monitor the switch elements (14) and line protection elements of the power distribution device (12), and to transfer error information to the communication unit (16),
- the communication unit (16) is so designed as to send this error information via one of the communication interfaces (3, 4) to an interface module (30).

5. Power module (1) according to one of the preceding claims,
**characterised in that** it has a measuring device (24) for measuring a voltage which is present at the power input (7) and that the control and/or regulation unit (15) is connected to the measuring device (24) and is so configured as to use the measured value of the voltage that is present at the power input (7) to correct the reference values which have been received from the communication unit (16) or derived therefrom, in order to compensate for voltage fluctuations.

6. Power module (1) according to one of the preceding claims,
**characterised in that**
- the housing (2) has at least one fan output (25) for the electrical attachment of a fan (26),
- the power distribution device (12) is electrically connected on the output side via a branch (14) to the fan output (25) in order to supply this with electrical current from the voltage supply (10), wherein a switch element (27) is connected into the branch (14),
- the communication unit (16) is so configured as to receive fan control commands and/or fan reference values intended for the power module (1) via the first communication interface (3) and to transfer these to the control and/or regulation unit (15), and to forward fan control commands and/or fan reference values received via the first communication interface (3) and not intended for the power module (1) to the second communication interface (4),
- the control and/or regulation unit (15) is so configured as to control and/or regulate the switching state of the switch element (27) which is connected into the branch (14) to the fan output (25) as a function of the fan control commands and/or fan reference values received from the communication unit 16.

7. Power module (1) according to one of the preceding claims,
**characterised in that** the housing (2) is designed to have a protection type of IP 65 or better.

8. Power module (1) according to one of the preceding claims,
**characterised in that** the interfaces (3, 4, 5, 6) and inputs and outputs (7, 8, 20, 22, 25) are designed as plug connections.

9. Interface module (30) for a heating controller and/or regulator, comprising
- a first communication interface (33) for the attachment to a supervisory communication system (37),
- a second communication interface (34), which can be connected to a first communication interface (3) of a power module (1),
- a first voltage supply interface (35), which can be connected to an external voltage supply (39),
- a second voltage supply interface (36), which can be connected to a first voltage supply interface (5) of a power module (1),
- a communication and control unit (40), which is so designed as to
a) receive reference values via the first communication interface (33), for the heating power of heating elements (9),
b) assign these reference values to power modules (1),
c) send these reference values or reference values derived therefrom, with information indicating the assigned power module (1) in each case, to the power modules (1) via the second communication interface (34) .

10. Interface module (30) according to claim 9, **characterised in that** is has an error memory (41) and that the communication and control unit (40) is so designed as to store the error information received from power modules (1) in this error memory (41).

11. Interface module (30) according to one of claims 9 to 10, **characterised in that** the communication and control unit (40) is so designed as to send temperature information and/or voltage information received from power modules (1) to a supervisory control and/or regulation device (38) via the first communication interface (33).

12. Interface module (30) according to one of claims 9 to 11, **characterised in that** the interfaces (33, 34, 35, 36) are designed as plug connections.

13. Interface module (30) according to one of claims 9 to 12, **characterised in that** it has a housing (31) of protection type IP 65 or better.

14. System (100) for heating control and/or regulation, comprising at least one power module (1) according to one of claims 1 to 8 and an interface module (30) according to one of claims 9 to 13,
wherein the modules (1, 30) are connected in series starting from the interface module (30) via their voltage supply interfaces (5, 6, 36) for the purpose of forwarding a supply voltage (Ui) and via their communication interfaces (3, 4, 34) for the purpose of forwarding reference values for heating elements (9).

15. System (100) according to claim 14,
**characterised in that** the at least one power module (1) is so arranged as to be spatially distant from the interface module and in the immediate vicinity of the heating elements (9) which it is to control and/or regulate.

16. System (100) according to one of claims 14 to 15, **characterised in that** connection lines (46, 47) between two of the series-connected modules (1, 30) are combined to form a single cable (48) which is preferably screened and preferably of a plug-in type.

## Revendications

1. Module (1) de puissance d'une commande et/ou d'une régulation de chauffage ayant un boîtier (2), comprenant
- une première interface (3) de communication et une deuxième interface (4) de communication, la première interface (3) de communication pouvant être reliée à une deuxième interface (4 ou 36) de communication d'un autre module (1) de puissance ou d'un module (30) d'interface et la deuxième interface (4) de communication pouvant être reliée à une première interface (3) de communication d'un autre module (1) de puissance,
- une première interface (5) d'alimentation en tension et une deuxième interface (6) d'alimentation en tension pour l'alimentation en tension du module (1) de puissance, la première interface (5) d'alimentation en tension pouvant être reliée à une deuxième interface (6) d'alimentation en tension d'un autre module (1) de puissance ou d'un module (30) d'interface et la deuxième interface (6) d'alimentation en tension pouvant être reliée à une première interface (5) d'alimentation en tension d'un autre module (1) de puissance,
- plusieurs sorties (8) de puissance auxquelles le, respectivement, un élément (9) de chauffage, notamment, respectivement, un radiateur chauffant, peut être connecté électriquement,
- une entrée (7) de puissance, qui peut être connectée électriquement à une alimentation (10) en tension des éléments (9) de chauffage,
dans lequel le module (1) de puissance, entouré du boîtier (2), a :
- un dispositif (12) de répartition du courant, qui, du côté de l'entrée, est relié électriquement à l'entrée (7) de puissance et, du côté de la sortie, électriquement aux sorties (9) de puissance, par l'intermédiaire, respectivement, d'une dérivation (13), afin d'alimenter celles-ci en courant électrique à partir de l'alimentation (10) en tension,
- respectivement, un élément (14) de coupure dans chacune des dérivations (13),
- une unité (15) de commande et/ou de régulation, qui est conçue de manière à commander et/ou à réguler l'état de coupure des éléments (14) de coupure, en fonction de valeurs de consigne pour une puissance de chauffage des éléments (9) chauffants,
- une unité (16) de communication, qui est conçue de manière à recevoir des valeurs de consigne destinées au module (1) de puissance, par la première interface (3) de communication et les transmettre à l'unité (15) de commande et/ou de régulation et à acheminer à la deuxième interface (4) de communication, des valeurs de consigne reçues par la première interface (3) de communication et non destinées au module (1) de puissance.

2. Module (1) de puissance suivant la revendication 1, **caractérisé en ce que**
- le boîtier (2) a au moins une entrée (20) de raccordement d'une sonde (21) de température,
- l'unité (15) de commande et/ou de régulation est constituée de manière à détecter une information de température par cette sonde (21) de température.

3. Module (1) de puissance suivant la revendication 1 ou 2, **caractérisé en ce que**
- le boîtier (2) a au moins une entrée (22) de raccordement d'un capteur (23) de courant/tension,
- l'unité (15) de commande et/ou de régulation est constituée de manière à détecter une information de tension par ce capteur (23) de tension.

4. Module (1) de puissance suivant l'une des revendications précédentes,
**caractérisé en ce que**
- l'unité (15) de commande et/ou de régulation est constituée de manière à contrôler les éléments (14) de coupure et les éléments de protection de ligne du dispositif (12) de répartition de courant et à transmettre des informations de défaut à l'unité (16) de communication,
- l'unité (16) de communication est constituée de manière à envoyer à un module (30) d'interface ces informations de défaut par l'intermédiaire de l'une des interfaces (3, 4) de communication.

5. Module (1) de puissance suivant l'une des revendications précédentes,
**caractérisé en ce qu'**il a un dispositif (24) de mesure pour mesurer une tension s'appliquant à l'entrée (7) de puissance et **en ce que** l'unité (15) de commande et/ou de régulation est reliée au dispositif (24) de mesure et est conçue de manière à corriger, par la valeur mesurée de la tension s'appliquant à l'entrée (7) de puissance, les valeurs de consigne reçues de l'unité (16) de communication ou qui s'en déduisent, afin de compenser les fluctuations de tension.

6. Module (1) de puissance suivant l'une des revendications précédentes,
**caractérisé en ce que**
- le boîtier (2) a au moins une sortie (25) de ventilateur de raccordement électrique d'un ventilateur (26),
- le dispositif (12) de répartition de courant est relié du côté de la sortie, par l'intermédiaire d'une dérivation (14), électriquement à la sortie (25) de ventilateur, afin d'alimenter celle-ci en courant électrique à partir de l'alimentation (10) en tension, un élément (27) de coupure étant monté dans la dérivation (14),
- l'unité (16) de communication est conçue pour recevoir des instructions de commande de ventilateur et/ou des valeurs de consigne de ventilateur destinées au module (1) de puissance, par l'intermédiaire de la première interface (3) de communication et pour les transmettre à l'unité (15) de commande et/ou de régulation et pour acheminer, à la deuxième interface (4) de communication, des instructions de commande de ventilateur et/ou des instructions de consigne de ventilateur reçues par l'intermédiaire de la première interface (3) de communication et non destinées au module (1) de puissance,
- l'unité (15) de commande et/ou de régulation est conçue de manière à commander et/ou à réguler l'état de coupure de l'élément (27) de coupure, qui est monté dans la dérivation (14) par rapport à la sortie (25) de ventilateur, en fonction des instructions de commande de ventilateur et/ou des valeurs de consigne de ventilateur reçues par l'unité (16) de communication.

7. Module (1) de puissance suivant l'une des revendications précédentes,
**caractérisé en ce que** le boîtier (2) est constitué en étant de type de protection IP 65 ou meilleur.

8. Module (1) de puissance suivant l'une des revendications précédentes,
**caractérisé en ce que** les interfaces (3, 4, 5, 6) et les entrées et sorties (7, 8, 20, 22, 25) sont sous la forme de liaisons par enfichage.

9. Module (30) d'interface d'une commande et/ou régulation de chauffage, comprenant
- une première interface (33) de communication de connexion à un système (37) de communication supérieur hiérarchiquement,
- une deuxième interface (34) de communication, qui peut être reliée à une première interface (3) de communication d'un module (1) de puissance,
- une première interface (35) d'alimentation en tension, qui peut être reliée à une alimentation (39) en tension extérieure,
- une deuxième interface (36) d'alimentation en tension, qui peut être reliée à une première interface (5) d'alimentation en tension d'un module (1) de puissance,
- une unité (40) de communication et de commande, qui est constituée de manière
a) à recevoir des valeurs de consigne de la puissance de chauffage d'éléments (9) chauffants par l'intermédiaire de la première interface (33) de communication,
b) à associer ces valeurs de consigne à des modules (1) de puissance,
c) à envoyer ces valeurs de consignes ou des valeurs de consignes qui s'en déduisent, ensemble avec une information sur le module (1) de puissance associé, respectivement, au module (1) de puissance par l'intermédiaire de la deuxième interface (34) de communication.

10. Module (30) d'interface suivant la revendication 9,
**caractérisé en ce qu'**il a une mémoire (41) de défaut et **en ce que** l'unité (40) de communication et de commande est constituée de manière à mémoriser, dans cette mémoire (41) de défaut, des informations de défaut reçues de modules (1) de puissance.

11. Module (30) d'interface suivant l'une des revendications 9 à 10,
**caractérisé en ce que** l'unité (40) de communication et de commande est constituée de manière à envoyer à un dispositif (38) de commande et/ou de régulation supérieur hiérarchiquement, par l'intermédiaire de la première interface (33) de communication, des informations de température et/ou des informations de tension reçues de modules (1) de puissance.

12. Module (30) d'interface suivant l'une des revendications 9 à 11,
**caractérisé en ce que** les interfaces (33, 34, 35, 36) sont constituées sous la forme de liaisons à enfichage.

13. Module (30) d'interface suivant l'une des revendications 9 à 12,
**caractérisé en ce qu'**il a un boîtier (31) de type de protection IP 65 ou meilleur.

14. Système (100) de commande et/ou de régulation de chauffage, comprenant au moins un module (1) de puissance suivant l'une des revendications 1 à 8 et un module (30) d'interface suivant l'une des revendications 9 à 13,
dans lequel les modules (1, 30) sont montés en série, à partir de l'élément (30) d'interface, par leur interface (5, 6, 36) d'alimentation en tension pour l'acheminement d'une tension (Ui) d'alimentation et par leur interface (3, 4, 34) de communication pour l'acheminement de valeurs de consigne pour des éléments (9) de chauffage.

15. Système (100) suivant la revendication 14,
**caractérisé en ce que** le au moins un module (1) de puissance est éloigné dans l'espace du module d'interface, en étant à proximité immédiate dans l'espace d'éléments (9) de chauffage qu'il doit commander et/ou réguler.

16. Système (100) suivant l'une des revendications 14 à 15, **caractérisé en ce que** des lignes (46, 47) de liaison, entre deux des modules (1, 30) montés en série, sont rassemblés en un câble (48) unique, de préférence blindé, et de préférence enfichable.
